## Europäisches Patentamt
## European Patent Office
## Office européen des brevets

(19)

(11) Veröffentlichungsnummer: **0 191 022**
**B1**

(12) **EUROPÄISCHE PATENTSCHRIFT**

(45) Veröffentlichungstag der Patentschrift:
**06.09.89**

(51) Int. Cl.⁴: **G 01 C 21/22, G 09 B 29/10**

(21) Anmeldenummer: **85902451.5**

(22) Anmeldetag: **10.05.85**

(86) Internationale Anmeldenummer:
**PCT/DE 85/00154**

(87) Internationale Veröffentlichungsnummer:
**WO 86/01288 (27.02.86 Gazette 86/5)**

(54) VORRICHTUNG ZUR ERFASSUNG VON NAVIGATIONSDATEN.

(30) Priorität: **04.08.84 DE 3428847**

(43) Veröffentlichungstag der Anmeldung:
**20.08.86 Patentblatt 86/34**

(45) Bekanntmachung des Hinweises auf die Patenterteilung:
**06.09.89 Patentblatt 89/36**

(84) Benannte Vertragsstaaten:
**AT DE FR GB IT SE**

(56) Entgegenhaltungen:
**EP-A- 0 088 565**
**EP-A- 0 089 295**
**EP-A- 0 090 965**
**FR-A- 1 361 002**
**LU-A- 65 252**
**US-A- 3 944 740**

(73) Patentinhaber: **ROBERT BOSCH GMBH, Postfach 50, D-7000 Stuttgart 1 (DE)**

(72) Erfinder: **KNOLL, Peter, Albert Schweitzerstrasse 9, D-7505 Ettlingen 1 (DE)**
Erfinder: **KÖNIG, Winfried, Murgstrasse 8, D-7507 Pfinztal-Burghausen (DE)**
Erfinder: **RAPPS, Peter, Badenerstrasse 2, D-7500 Karlsruhe 41 (DE)**
Erfinder: **WALZ, Thomas, Brötzingerstrasse 48, D-7530 Pforzheim (DE)**

## Beschreibung

### Stand der Technik

Die Erfindung geht aus von einer Vorrichtung zur Erfassung von Navigationsdaten für Fahrzeuge nach der Gattung des Hauptanspruchs. In letzter Zeit ist eine Vielzahl von Navigationsverfahren für Fahrzeuge bekannt geworden, bei denen mit Hilfe der Koordinaten des Ausgangspunktes der Fahrtroute und einer im Fahrzeug mitgeführten Koppelnavigationsanlage fortlaufend der augenblickliche Standort des Fahrzeuges ermittelt und mittels eines Anzeigegerätes der jeweilige Standort in einem Lageplan angezeigt wird. Ein solches Navigationsverfahren ist z. B. aus der DE-OS 2 936 774 bekannt. Dort wird der Fahrzeugstandort in dem Lageplan (Kartenausschnitt) durch einen in eine Richtung, z. B. nach oben, und in die Fahrtrichtung zeigenden Pfeil dargestellt. Bei Fahrzeugfahrt wird mittels der gemessenen Richtungs- und Wegsignale die Karte in Richtung entgegen dem die Fahrtrichtung anzeigenden Pfeil bewegt und um den Standort des Fahrzeugs gedreht. Für den Betrachter bewegt sich dadurch der Standort und Fahrtrichtungspfeil scheinbar entlang den gewünschten Strassen und ist dabei immer nach oben gerichtet. Diese Darstellungsart ist manchmal unübersichtlich und nicht erwünscht. In der deutschen Patentanmeldung 3 341 679 wird daher eine Vorrichtung vorgeschlagen, bei der vor Antritt der Fahrt mittels eines Codiergerätes und einer in dieses eingelegten Karte die gewünschte Fahrtroute durch deren Nachfahren mit einem Codierstift festgelegt und die Lage der Punkte abgespeichert wird. Während der Fahrt wird mittels der Anzeige des Gerätes neben der Standortanzeige die gewünschte Fahrtroute wenigstens im Bereich des augenblicklichen Standorts und zumindest zeitweise markiert. Zur Codierung der vorgesehenen Fahrtroute wird ein Codiergerät verwendet, mit dem mittels eines Stiftes der an zwei Fadenrollen befestigt ist, vom Standort zum Zielort entlang dem vorhandenen Strassennetz der Karte gefahren wird. In definierten Zielabständen wird die jeweilige Richtung und die jeweilige Länge des Fadens bestimmt. Mit den so gewonnenen Ergebnissen ist die Fahrtroute abspeicherbar. Die dort gezeigte Anordnung ist in ihrem Aufbau umfangreich und daher kostspielig. Aus der EP-A 10 090 965, von der ausgehend der Oberbegriff des Hauptanspruchs gebildet ist, ist des weiteren ein Verfahren und eine Vorrichtung zur Koordinateneingabe bei einem automatischen Leitsystem für Fahrzeuge bekannt geworden, bei dem die Koordinaten mittels eines optischen oder magnetischen Code-Lesers von einer mit einem Strichcode versehenen Vorlage in das System eingegeben werden. Das Raster des Strichcodes kann dabei entweder direkt auf der Karte angeordnet sein oder einer transparenten Folie entnommen werden, die über die Karte gelegt wird. Aus der LU-A 65 252 ist eine Einrichtung zur Ermittlung und elektrischen Darstellung der Ortskoordinaten von Punkten einer Fläche bekannt geworden, bei der ein aus sich kreuzenden Leiterbahnen bestehendes Rasterfeld gebildet wird, bei dem die an ihren Kreuzungspunkten gegeneinander isolierten Leiterbahnen der Spalten und Zeilen des Rasterfeldes nacheinander kurzzeitig mit einer Stromquelle verbunden sind. Mit dem Kopf eines Taststiftes, der einen induktiven Abgriff aufweist, ist nunmehr feststellbar, wann die Spalten und Zeilen in der Nähe des Taststiftes eingeschaltet werden, und aus den Schaltvorgängen kann auf die Ortskoordinate geschlossen werden. Diese Massnahme setzt das Aufbringen von leitenden Schichten auf der Karte voraus, die in einem bestimmten Raster eingeschaltet werden können.

Schliesslich ist in der EP-A 0 089 295 eine elektrische Steuervorrichtung beschrieben, bei der leitende, wechselweise mit negativem und positivem Potential beaufschlagte Zonen am Rand einer Widerstandsschicht aufgebracht sind und bei der der Steuergriffel auf der Widerstandsschicht gefahren wird. Hierdurch ist es möglich, die Lage des Steuergriffels relativ zur Widerstandsfläche gut zu bestimmen. Definierte und gerade Äquipotentiallinien sind jedoch durch die bekannte Massnahmen nicht zu erhalten.

### Vorteile der Erfindung

Die erfindungsgemässe Vorrichtung mit den kennzeichnenden Merkmalen des Hauptanspruchs hat demgegenüber den Vorteil, dass geradlinige Äquipotentiallinien erzeugt werden können, die aufeinander senkrecht stehen, und dass diese Äquipotentiallinien auch bei grösseren Karten geradlinig bleiben, so dass durch die Abtastung mittels eines Griffels auf einfache Art und Weise der Ort des Griffels feststellbar ist. Durch die Verwendung mehrerer Dioden, die die Elektroden mit der Widerstandsfläche verbinden, wird erreicht, dass die Spannungen zur Ausbildung der Äquipotentiallinien völlig homogen ausgebildet sind, so dass Verzerrungen auch in den Randbereichen nicht auftreten. Durch die in den abhängigen Ansprüchen aufgeführten Massnahmen sind vorteilhafte Weiterbildungen und Verbesserungen der im Hauptanspruch angegebenen Vorrichtung möglich. Vorteilhaft ist es, die Widerstandsfläche als getemperte Zinn–Indium–Oxid-Schicht auszubilden. Durch diese Massnahme wird erreicht, dass die Widerstandsschicht ausreichend stabil und auch abriebfest ist und zudem die Lesbarkeit der darunterliegenden Karte kaum beeinträchtigt wird. Weiterhin ist es vorteilhaft, das Ausgangssignal des Griffels eine Sample- und Hold-Schaltung zuzuführen, die synchron zu den Elektroden umschaltbar ist, und den Ausgang der Sample- und Hold-Schaltung einem Analog-Digitalwandler zuzuführen. Durch diese Massnahme wird erreicht, dass auf einfachste Art und Weise das Griffelsignal sowohl in seiner horizontalen als auch in seiner vertikalen Komponente in digitaler Form zur Verfügung steht, so dass es von nachgeschalteten Mikrorechnern, wie sie bei Navigationssystemen Verwendung finden, ausgewertet werden können.

Der periphere Aufwand für die Koordinatenaufnahme ist daher minimal.

Zeichnung

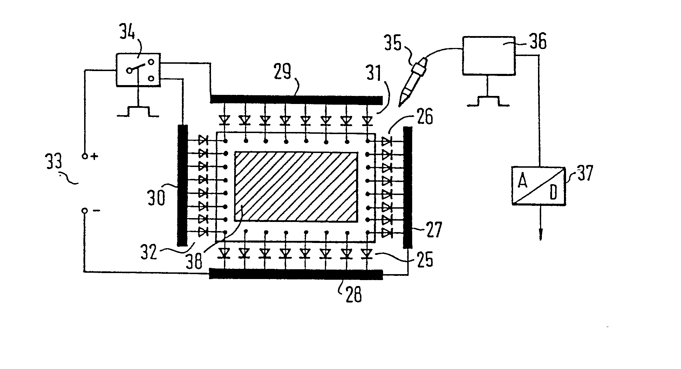

Ein Ausführungsbeispiel der Erfindung ist in der Zeichnung dargestellt und in der nachfolgenden Beschreibung näher erläutert.

Beschreibung des Ausführungsbeispiels

Die Figur zeigt eine Möglichkeit, wie auf einfache Art und Weise eine absolute Positionseingabe zu schaffen ist. Dabei findet ein graphisches Tablett zur Eingabe der Daten Verwendung. Als aktives Feld kommt hierbei eine durchsichtige Widerstandsfläche 38 zur Anwendung. Diese Widerstandsfläche ist sowohl in horizontaler Richtung über Dioden 32 und 26 als auch in vertikaler Richtung über Dioden 25 und 31 an gut leitende Randelektroden 30 und 27 bzw. 28 und 29 angeschlossen. Die Elektroden 27 und 28 stehen mit der negativen Versorgungsspannung einer Spannungsquelle 33, die Elektroden 29 und 30 mit jeweils einem Ausgang eines Umschalters 34 in Verbindung. An den Eingang des Schalters 34 ist die positive Versorgungsspannung angeschlossen. Mittels eines elektrischen Griffels 35 sind die Signale des graphischen Tabletts abgreifbar und werden in einer Sample- und Hold-Schaltung 36 zwischengespeichert. Das Signal der Sample- und Hold-Schaltung 36 wird einem Analog-Digitalwandler 37 zugeführt und in ein digitales Wort umgewandelt.

Grundlage der Vorrichtung ist eine homogene Widerstandsfläche, an der nach der Methode des unbelasteten Spannungsteilers eine dem Ort proportionale Spannung über den Griffel 35 abgegriffen wird. Wesentlich dabei ist, dass sich über die Widerstandsfläche ein homogenes Feld und Äquipotentiallinien ausbilden, die als Geraden parallel zu den Elektroden verlaufen. Dies ist eine Notwendigkeit, da beim Führen entlang einer solchen Linie je eine Koordinate konstant bleiben muss. Dies bedingt lediglich die Verwendung von zwei Elektroden, beispielsweise Elektrode 28 und 29. Dadurch kann jedoch der Griffel 35 nur eine Koordinate aufnehmen. Sollen beide Koordinaten aufgenommen werden, so sind zwei Elektrodenpaare 28 und 29 und 27 und 30 vorzusehen. Liegen beide Elektroden gleichzeitig an Spannung, wird jedoch dadurch ein inhomogenes Feld und damit von der Geraden abweichende Potentiallinien erzeugt. Über einen Schalter 34 werden daher die Elektroden 29 und 30 zyklisch an die Betriebsspannung geschaltet und mit ihnen die Sample- und Hold-Schaltung 36 synchron umgeschaltet. Das jeweils nicht durchgeschaltete Elektrodenpaar ist über dann gesperrte, punktförmig kontaktierte Dioden 25, 26, 31 und 32 auf der Widerstandsfläche 38 elektrisch nicht wirksam. Statt einer Äquipotentiallinie erhält man bei der Überlagerung der vertikalen und der horizontalen Äquipotentiallinie ein Raster, das eine absolute Positionseingabe gestattet.

Weiterhin wesentlich für die Erhaltung der Homogenität der Schichten ist die Abriebfestigkeit der Widerstandsschicht. Hier haben sich getemperte Zinn-Indium-Oxid-Schichten als ausreichend stabil erwiesen. Als Substrat eignet sich sowohl Glas als auch Kunststoff, vorzugsweise Polycarbonatfolie.

Die mit dem Griffel 35 abgetasteten Horizontal- und Vertikalkoordinaten werden in der Sample- und Hold-Schaltung 36 zwischengespeichert und nach dem Analog-Digitalwandler 37 als digitales Wort an den Rechner weitergegeben und zur Weiterleitung an das Navigationssystem aufbereitet.

Unabhängig von der geometrischen Abmessung der Fläche 38 erhält man eine Auflösung, die der Bitzahl des Analog-Digitalwandlers 37 entspricht. Durch diese Anordnung ist daher eine einfache absolute Positionsangabe der Kartenkoordinaten gegeben.

Patentansprüche

1. Vorrichtung zur Erfassung von Navigationsdaten für Fahrzeuge von einer Landkarte mit einem transparenten Träger, der auf die Landkarte auflegbar ist, dadurch gekennzeichnet, dass der transparente Träger eine ebenfalls durchsichtige, durchgehende leitfähige homogene Widerstandsfläche (38) aufweist, an die abwechselnd in vertikaler und in horizontaler Richtung Potentiale zur Erzeugung von Äquipotentiallinien anlegbar sind, die von einem Griffel (35) abtastbar sind, und dass die Äquipotentiallinien durch am Rand der Widerstandsfläche (38) angebrachte Elektroden (27, 28, 29, 30) erzeugbar sind, wobei die Elektroden (27, 28, 29, 30) mit dem Rand der Widerstandsfläche (38) über Dioden (25, 26, 31, 32) in Verbindung stehen.

2. Vorrichtung nach Anspruch 1, dadurch gekennzeichnet, dass die Widerstandsfläche (38) als getemperte Zinn-Indium-Oxid-Schicht ausgebildet ist.

3. Vorrichtung nach Anspruch 1 oder 2, dadurch gekennzeichnet, dass das Ausgangssignal des Griffels (35) einer Sample- und Hold-Schaltung (36) zuführbar ist, die synchron zu den Elektroden (27, 28, 29, 30) umschaltbar ist, und dass der Ausgang der Sample- und Hold-Schaltung (36) mit einem Analog-Digitalwandler (37) in Verbindung steht.

Claims

1. Device for the acquisition of navigation data for vehicles from a map having a transparent support which can be placed on the map, characterized in that the transparent support exhibits a likewise transparent, entirely conductive homogeneous resistance surface (38) to which potentials can be applied in the vertical and in the horizontal direction alternately to generate equipotential lines which can be scanned by a pencil (35), and that the equipotential lines can be generated by electrodes (27, 28, 29, 30) placed at the edge of the resistance surface (38), the electrodes (27, 28, 29, 30) being connected to the edge of the resistance surface (38) by diodes (25, 26, 31, 32).

2. Device according to Claim 1, characterized in that the resistance surface (38) is constructed as a tempered tin/indium oxide layer.

3. Device according to Claim 1 or 2, characterized in that the output signal of the pencil (35) can be fed to a sample-and-hold circuit (36) which is commutable synchronously to the electrodes (27, 28, 29, 30), and that the output of the sample-and-hold circuit (36) is connected to an analog/digital converter (37).

**Revendications**

1. Dispositif de saisie des données de navigation pour véhicule à partir d'une carte routière avec un support transparent appliquable sur la carte routière, caractérisé en ce que le support transparent porte une face résistante (38) homogène également transparente et complétement conductrice, sur laquelle des potentiels destinés à produire des lignes équipotentielles sont susceptibles d'être appliqués alternativement en direction verticale et horizontale et peuvent être balayées par un crayon (35), et en ce que, les lignes équipotentielles sont susceptibles d'être produites par des électrodes (27, 28, 29, 30) montables sur le bord de la face résistante (38), les électrodes (27, 28, 29, 30) étant reliées au bord de la face résistante (38) par l'intermédiaire de diodes (25, 26, 31, 32).

2. Dispositif selon la revendication 1, caractérisé en ce que la surface résistante (38) est réalisée sous forme d'une couche malléabilisée d'oxyde d'étain et d'indium.

3. Dispositif selon la revendication 1 ou 2, caractérisé en ce que le signal de sortie du crayon (35) est susceptible d'être amené à un circuit d'échantillonnage et de maintien (36) commutable de manière synchrone par rapport aux électrodes (27, 28, 29, 30) et en ce que la sortie du circuit d'échantillonnage et de maintien (36) est reliée à un convertisseur analogique-numérique (37).